# EUROPEAN PATENT APPLICATION

(11) **EP 4 470 845 A1**
(43) Date of publication of application: **04.12.2024**
(21) Application number: 24174547.0
(22) Date of filing: 07.05.2024
(51) Int. Cl.: B60R 19/48, B60R 21/0136

(54) **VEHICLE COLLISION DETECTION APPARATUS**

(30) Priority: 29.05.2023 JP 2023087447
(71) Applicant: Suzuki Motor Corporation, Shizuoka 432-8611 (JP)
(72) Inventor: HORI, Toru, HAMAMATSU-SHI, 432-8611 (JP)
(74) Representative: Plasseraud IP

(57) **Abstract**

[Object] Provided is a vehicle collision detection apparatus capable of detecting a collision while clearly distinguishing between a collision with a pedestrian and a collision with a small animal.

[Means to Solve the Problem] A vehicle collision detection apparatus (100) includes: a collision detection sensor (106) that is installed rearward of a front bumper (104) of a vehicle (102) and detects a collision as a result of a pressure being applied to the collision detection sensor (106); a support plate (108) having a flat-plate shape, located rearward of the collision detection sensor (106), and supporting the collision detection sensor (106); an absorber (110) that is located forward of the collision detection sensor (106) and applies a pressure to the collision detection sensor (106) when buffering an impact received from front via the front bumper (104); a first plate (120) covering a front face of the absorber (110) over an entire vertical range of the front face; and a second plate (130A, 130B) installed forward of the first plate (120) and extending from a higher position than the first plate (120) over a vertical range of the first plate (120).

## Description

### [Field of the Invention]

The present invention relates to a vehicle collision detection apparatus.

### [Background of the Invention]

For example, a collision detection apparatus of Patent Document 1 includes an impact-absorbing portion that deforms when a vehicle collides and absorbs the impact, a collision-detecting portion that detects the collision by deforming when the vehicle collides, and a reinforcing portion that reinforces the rigidity of a lower portion of the collision-detecting portion. Patent Document 1 states that this configuration enables the collision detection apparatus to detect collisions while clearly distinguishing between a collision with a pedestrian and a collision with a small animal or the like.

### [Prior Art Documents]

### [Patent Documents]

[Patent Document 1] JP 2021-138184A

### [Summary of the Invention]

### [Problems to be Solved by the Invention]

Since a small animal that collides with a vehicle is an elastic body and is soft, the force is not transmitted straight backward from the surface that came into contact with the vehicle, but is distributed radially backward. Patent Document 1 does not give consideration to the distribution of the force in the case of a collision with a small animal, and it is therefore difficult to consider that a difference in input can be clearly distinguished between a collision with a pedestrian and a collision with a small animal.

If the collision detection apparatus detects a collision and activates an airbag or a pop-up hood for pedestrian protection that are provided in a front section of the vehicle even in the case of a collision with a small animal, this will cause safety issues due to obstructing the driver's field of view, and also cause repair costs. Therefore, it is desirable that a collision is not detected and a detection sensor is not activated if the collision is with a small animal.

In view of the forgoing problem, the present invention aims to provide a vehicle collision detection apparatus capable of detecting a collision while clearly distinguishing between a collision with a pedestrian and a collision with a small animal.

### [Means to Solve the Problems]

To solve the above-stated problem, a representative configuration of a vehicle collision detection apparatus according to the present invention is characterized in that the vehicle collision detection apparatus includes: a collision detection sensor that is installed rearward of a front bumper of a vehicle and detects a collision as a result of a pressure being applied to the collision detection sensor; a support plate having a flat-plate shape, located rearward of the collision detection sensor, and supporting the collision detection sensor; an absorber that is located forward of the collision detection sensor and applies a pressure to the collision detection sensor when buffering an impact received from front via the front bumper; a first plate covering a front face of the absorber over an entire vertical range of the front face; and a second plate installed forward of the first plate and extending from a higher position than the first plate over a vertical range of the first plate.

### [Effect of the Invention]

According to the present invention, it is possible to provide a vehicle collision detection apparatus capable of detecting a collision while clearly distinguishing between a collision with a pedestrian and a collision with a small animal.

### [Brief Explanation of the Drawings]

FIG. 1 shows front views and plan views of a first example of a vehicle collision detection apparatus according to the present invention.
FIG. 2 shows cross-sectional views of the vehicle collision detection apparatus shown in FIGS. 1(a) and 1(c) each taken along a line A-A.
FIG. 3 shows schematic diagrams illustrating how the force received from a colliding object is transmitted when the vehicle in FIG. 1 collides with the colliding object.
FIG. 4 illustrates a second example of the vehicle collision detection apparatus according to the present invention in correspondence with FIG. 2.

### [Embodiments of the Invention]

One embodiment of the vehicle collision detection apparatus according to the present invention is characterized in that the vehicle collision detection apparatus includes: a collision detection sensor that is installed rearward of a front bumper of a vehicle and detects a collision as a result of a pressure being applied to the collision detection sensor; a support plate having a flat-plate shape, located rearward of the collision detection sensor, and supporting the collision detection sensor; an absorber that is located forward of the collision detection sensor and applies a pressure to the collision detection sensor when buffering an impact received from front via the front bumper; a first plate covering a front face of the absorber over an entire vertical range of the front face; and a second plate installed forward of the first plate and extending from a higher position than the first plate over a vertical range of the first plate.

The legs of a pedestrian are similar to rigid bodies extending upward and downward. When colliding with a leg of a pedestrian, the second plate is pushed straight backward in the same posture although the second plate extends from a higher position than the first plate to the vertical range of the first plate. Pushed by the second plate, the first plate also pushes the absorber strongly backward. As a result, the absorber is completely crushed and serves as a buffer. At that time, the collision detection sensor is crushed and thus detects the collision.

In contrast, a small animal is similar to an elastic body, and the mass of the small animal is distributed above and below the center of the height of the front bumper. The second plate is located at a higher position than the first plate and is separated from the first plate. The second plate thus causes the mass distributed upward to flow backward. At this time, the second plate does not strongly push the first plate, the absorber is not crushed, and the collision detection sensor does not detect the collision.

Therefore, according to the present invention, an ideal result is achieved in which a pedestrian protection pop-up hood operates if a collision occurs with a pedestrian, whereas the pedestrian protection pop-up hood does not operate if a collision occurs with a small animal.

It is preferable that a lower end of the second plate is disposed on the first plate at a higher position than a center of the vertical range of the first plate, an upper end of the second plate is a free end, and a predetermined space is provided rearward of the second plate and above the first plate.

According to this configuration, only the lower end of the second plate is located on the first plate, and the upper end is a free end. Since a space is provided behind the second plate, the second plate is more likely to fall backward if a collision occurs with a small animal. Therefore, the force of the second plate pushing the first plate definitely weakens, and the absorber is not crushed. A malfunction in which the collision detection sensor detects a collision due to a small animal is avoided more reliably.

It is preferable that the absorber has: a main body covered by the first plate; a first leg extending backward from the main body and in contact with the support plate; and a second leg extending backward from the main body below the first leg, and in contact with the support plate, the collision detection sensor is located between the first leg and the second leg of the absorber, the vehicle collision detection apparatus further includes a bumper reinforcement reinforcing the front bumper and located rearward of the support plate, the bumper reinforcement has a first protrusion protruding forward and in contact with the support plate, and a second protrusion protruding forward below the first protrusion and in contact with the support plate, the first leg of the absorber overlaps the first protrusion of the bumper reinforcement over a predetermined vertical range, and the second protrusion of the bumper reinforcement is in contact with the support plate below the second leg of the absorber.

According to this configuration, the bumper reinforcement stably receives the absorber via the support plate. It is therefore possible to more reliably ensure correct behavior in which the pedestrian protection pop-up hood operates if a collision occurs with a pedestrian, whereas the pedestrian detection sensor does not detect the collision if a collision occurs with a small animal.

According to the above configuration, there is a sufficient space between the first leg and the second leg of the absorber. Thus, the collision detection sensor determines, when a collision occurs, whether or not the collision is with a pedestrian or a small animal without being affected by the ambient temperature.

It is preferable that the vehicle collision detection apparatus further includes: a license plate disposed forward of the front bumper, wherein the second plate is fixed to an upper end of the license plate with the front bumper therebetween.

According to this configuration, the second plate is pushed over a wide range due to the surface pressure of the license plate, which has a large area. This makes the distinction between the ON and OFF states clearer. That is, settings can be made so as to more accurately determine, when a collision occurs, whether the collision is with a pedestrian or is a minor collision with a small animal.

### Examples

Hereinafter, preferable examples of the present invention will be described in detail with reference to the attached drawings. Dimensions, materials, other specific values, and the like described in the examples are merely illustrative for facilitating understanding of the invention, and are not intended to limit the present invention unless stated otherwise. Note that in the present specification and drawings, elements having substantially the same function and configuration are assigned the same reference numerals to omit redundant descriptions, and elements that are not directly related to the present invention may be omitted in the drawings.

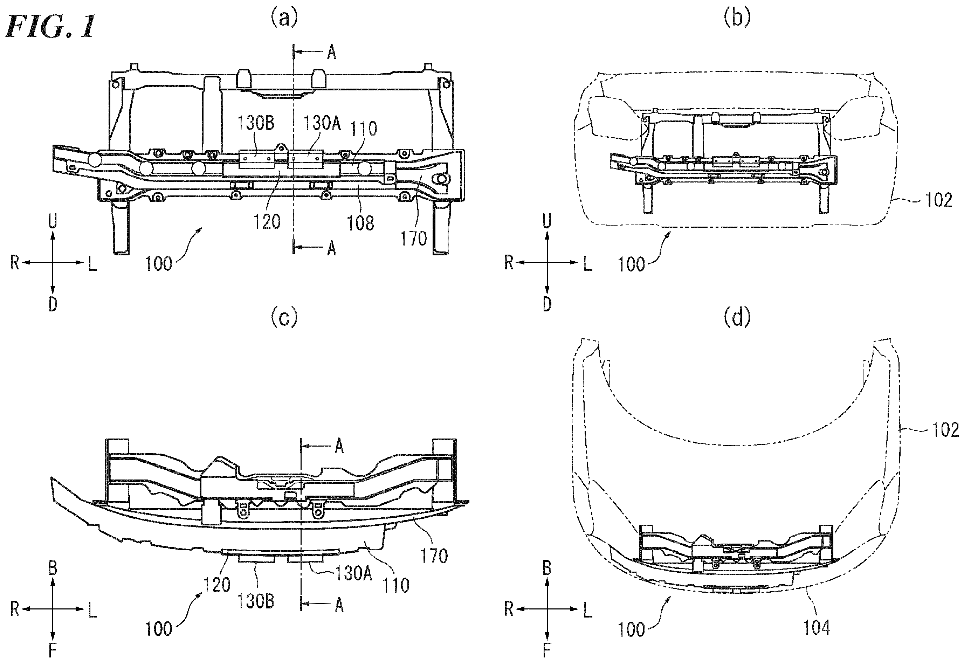

FIG. 1 shows schematic views of a first example of a vehicle collision detection apparatus according to the present invention. FIGS. 1(a) and 1(c) are a front view and a plan view, respectively, of a vehicle collision detection apparatus 100, and FIG. 1(b) and 1(d) are a front view and a plan view, respectively, of the vehicle collision detection apparatus 100 shown in FIGS. 1(a) and 1(c) shown with a vehicle 102. In FIG. 1 and all of the other drawings, arrows F (Forward) and B (Backward) indicate the front and back directions with respect to the vehicle, arrows L (Leftward) and R (Rightward) indicate the left and right in the vehicle width direction, and arrows U (Upward) and D (Downward) indicate the vertical direction.

### First example of vehicle collision detection apparatus

As shown in FIG. 1(d), the vehicle collision detection apparatus 100 is disposed rearward of a front bumper 104 of the vehicle 102. The vehicle collision detection apparatus 100 includes a collision detection sensor tube 106, which is installed rearward of the front bumper 104 and detects a collision as a result of pressure being applied thereto. The collision detection sensor tube 106 may be a pressure sensor. When a predetermined pressure is detected, the collision detection sensor tube 106 regards the detected pressure as a collision and activates a pedestrian protection pop-up hood (not shown).

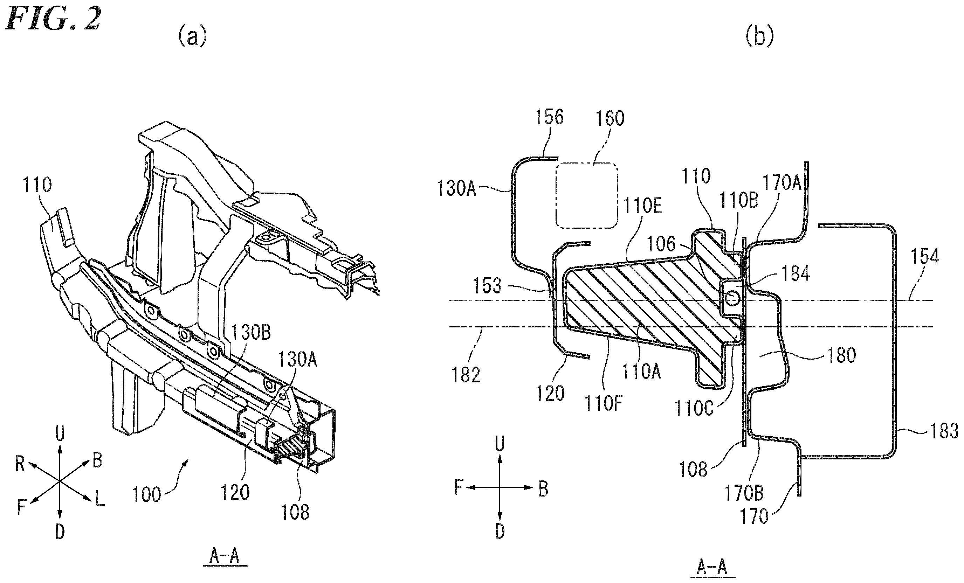

FIG. 2 shows cross-sectional views of the vehicle collision detection apparatus 100 shown in FIGS. 1(a) and 1(c), respectively. FIG. 2(a) is a perspective cross-sectional view, and FIG. 2(b) is a cross-sectional view of the vehicle 102 as seen from the left. The vehicle collision detection apparatus 100 includes a support plate 108, which is a flat-plate member located rearward of the collision detection sensor tube 106 and supports an absorber.

As shown in FIG. 2(b), the vehicle collision detection apparatus 100 includes an absorber 110, which is located forward of the collision detection sensor tube 106. The absorber 110 may use, for example, a blowing agent. The absorber 110 buffers the impact received from the front side via the front bumper 104 (see FIG. 1(d); not shown in FIG. 2), and crushes the collision detection sensor tube 106 at the time of the buffering.

Although FIG. 1(c) explicitly shows the range in the vehicle width direction where the absorber 110 in FIG. 2(b) is installed, the collision detection sensor tube 106 and the support plate 108 shown in FIG. 2(b) are also installed in substantially the same range in the vehicle width direction as the absorber 110.

### First plate and second plate

As shown in FIG. 2(b), the vehicle collision detection apparatus 100 includes a first plate 120, which is bent so as to protrude forward and covers the front face of the absorber 110 over the entire vertical range thereof.

As shown in FIGS. 1 and 2, the vehicle collision detection apparatus 100 also includes second plates 130A and 130B. The second plates 130A and 130B are also bent so as to protrude forward, and are installed forward of the first plate 120, extending from a higher position than the first plate 120 over an upper half of the first plate 120.

As shown in FIG. 1, all of the first plate 120 and the second plates 130A and 130B are located at the center of the vehicle 102 in the vehicle width direction, and are elongated in the vehicle width direction. The second plates 130A and 130B are installed with a gap therebetween in the vehicle width direction.

In this example, one first plate 120 and two second plates 130A and 130B are provided. However, the number of these plates may be one or more and may be any number as long as the positional relationship in which the second plates extend from a higher position than the first plate to the vertical range of the first plate is satisfied. Further, the forward-protruding bent shape of the first plate 120 and the second plates 130A and 130B in this example is merely illustrative, and is not limited thereto as long as the above positional relationship is satisfied.

Hereinafter, regarding the second plates 130A and 130B, some part of the description in this example is given with reference to only the second plate 130A, but the second plate 130B also has the same configuration unless stated otherwise.

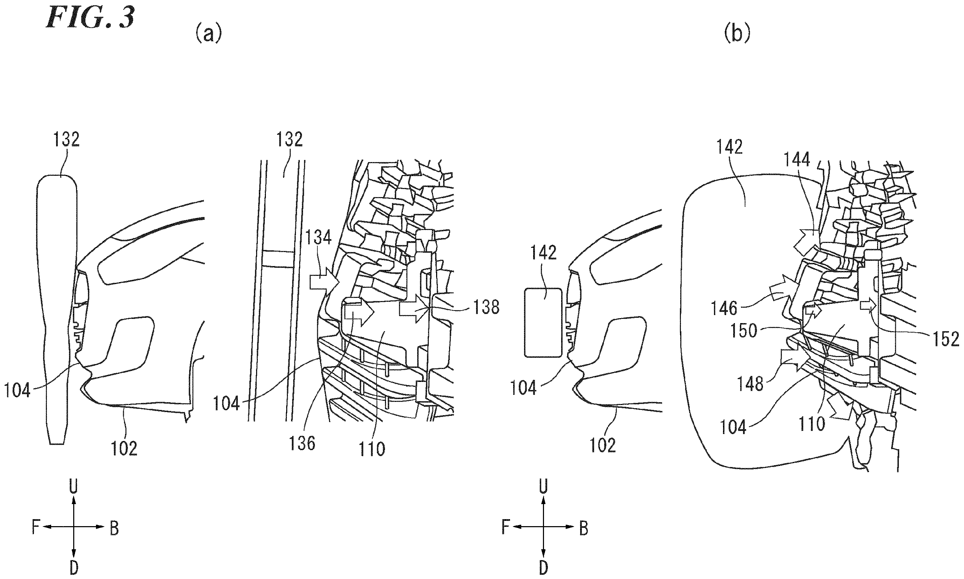

FIG. 3 shows schematic diagrams illustrating how the force received from a colliding object is transmitted when the vehicle in FIG. 1 collides with the colliding object. FIG. 3(a) shows a case where a leg 132 of a pedestrian collides with the vehicle 102, and FIG. 3(b) shows a case where a small animal 142 collides with the vehicle 102. The figure on the left side of each of FIGS. 3(a) and 3(b) shows the moment when the colliding object and the vehicle 102 collide, and the figure on the right side is an enlarged view of the left figure and shows how the force applied from the colliding object to the vehicle 102 is transmitted at the time of the collision.

The leg 132 of the pedestrian shown in FIG. 3(a) is similar to a rigid body extending upward and downward. As shown on the right side of FIG. 3(a), a force 134 received directly by the vehicle when the vehicle collides with the leg 132 of the pedestrian is applied straight backward. Accordingly, forces 136 and 138 applied to the absorber 110 also become relatively large and are directed straight backward.

On the other hand, the small animal 142 shown in FIG. 3(b) is similar to an elastic body. As shown on the right side of FIG. 3(b), the area of contact with the front bumper 104 of the vehicle at the time of the collision with the vehicle 102 is also larger than in the case of the collision with the leg 132 of the pedestrian in FIG. 3(a). Further, as shown on the right side of FIG. 3(b), forces 144, 146, and 148 that are directly received from the small animal 142 by the front bumper 104 of the vehicle 102 in the case of a collision with such a small animal are transmitted while being distributed vertically. The transmitted energy (force and mass) 150 and 152 is relatively small.

Accordingly, when the vehicle collision detection apparatus 100 in FIG. 2 collides with the leg 132 of the pedestrian, the second plate 130A, which extends from a position higher than the first plate 120 to the vertical range of the first plate 120, remains in the same posture and is pushed straight backward. Pushed by the second plate 130A, the first plate 120 also crushes the absorber 110 backward. As a result, the absorber 110 is crushed and serves as a buffer over the vertical and longitudinal width of the first plate 120. At this time, pressure is applied to the collision detection sensor tube 106, thus detecting the collision.

In contrast, when the vehicle collision detection apparatus 100 in FIG. 2 receives the impact due to the small animal 142 or the like, according to this example, the second plate 130A, which reaches a higher position than the first plate 120, distributes the force and is bent backward. In other words, the second plate 130A behaves such that an upper end 156 thereof rotates about a lower end 153 as a rotation axis. As a result, the first plate 120 overlapping the lower portion of the second plate 130A is hardly pushed by the second plate 130A, and the absorber 110 is therefore not crushed. Collision detection sensors disposed at respective ends of the collision detection sensor tube 106 do not detect a collision.

The function of the second plate 130A is as follows. That is, when the leg of the pedestrian collides, the second plate 130A immediately transmits the force and crushes the absorber 110 and the collision detection sensor tube 106. That is, the second plate 130A eliminates the time lag between when the driver recognizes collision and when the brakes begin to work. Even when the leg inclines and moves into the second plate 130A, the second plate 130A transmits the force to the absorber 110 in a translational direction. This is because the collision detection sensor tube 106 cannot be effectively crushed if the absorber 110 is crushed from above. Furthermore, when a small animal collides, the second plate 130A disperses the mass thereof and reduces the translational force of the absorber 110.

Therefore, according to this example, an ideal result can be achieved in which the pedestrian detection sensor detects a collision if a collision occurs with a pedestrian, and the pedestrian detection sensor does not detect a collision if a collision occurs with a small animal.

As shown in FIG. 2(b), the lower end 153 of the second plate 130A is disposed on the first plate 120 at a higher position than a center 154 of the vertical range of the first plate 120. Further, the upper end 156 of the second plate 130A is a free end and is not connected to any other member. Although not shown, the second plate 130A is fixed to the front bumper 104. A predetermined space 160 is provided rearward of the second plate 130A and above the first plate 120.

Thus, only the lower end 153 of the second plate 130A in FIG. 2(b) is disposed on the first plate 120, and the upper end 156 is a free end. Further, since the space 160 is provided behind the second plate 130A, the second plate 130A is more likely to bend backward if a collision occurs with the small animal 142. Therefore, the behavior in which the second plate 130A pushes the first plate 120 and crushes the absorber 110 is less likely to occur. That is, a malfunction in which the collision detection sensor tube 106 detects a collision due to a collision with a small animal is avoided more reliably.

### Absorber and bumper reinforcement

As shown in FIG. 2(b), the absorber 110 includes a main body 110A, which is covered by the first plate 120, a first leg 110B extending backward from the main body 110A and in contact with the support plate 108, and a second leg 110C extending backward from the main body 110A below the first leg 110B and in contact with the support plate 108. The collision detection sensor tube 106 is located in a space 184 between the first leg 110B and second leg 110C of the absorber 110.

As shown in FIG. 2(b), a top face 110E of the main body 110A of the absorber 110 has a shape that is inclined downward while extending forward, and a lower face 110F has a shape that is inclined upward while extending forward, as seen from the vehicle width direction.

As shown in FIG. 2(b), the vehicle collision detection apparatus 100 also includes a bumper reinforcement 170 that reinforces the front bumper 104. The bumper reinforcement 170 is located rearward of the support plate 108. The bumper reinforcement 170 has a first protrusion 170A protruding forward and in contact with the support plate 108, and a second protrusion 170B protruding forward below the first protrusion 170A and in contact with the support plate 108. A recess 180 is formed between the first protrusion 170A and the second protrusion 170B. Note that a reinforcing member 183 is also provided on the rear side of the bumper reinforcement 170.

As shown in FIG. 2, the first leg 110B of the absorber 110 and the first protrusion 170A of the bumper reinforcement 170 overlap over a predetermined vertical range. The second protrusion 170B of the bumper reinforcement 170 is in contact with the support plate 108 below the second leg 110C of the absorber 110. Therefore, the second leg 110C of the absorber 110 inevitably overlaps the recess 180 of the bumper reinforcement 170. In this example, both the second leg 110C of the absorber 110 and the recess 180 of the bumper reinforcement 170 overlap a center 182 of the vertical range of the bumper reinforcement 170. Note that the center 182 is set at an average knee height of a human (adult). The reason for thus setting the height is to bring the center 182 of the bumper reinforcement 170 as close as possible to the center of gravity of a pedestrian and accurately detect a collision with a pedestrian. Since the center of gravity of a pedestrian is approximately around the waist, the center 182 is set at the knee height of adults, and is set closer to the center of gravity (waist) for children.

That is, according to this example, even if a collision occurs with a small animal at a relatively low position, e.g. at a lower position than the center 154 of the vertical range of the first plate 120, it can be correctly determined that a collision has occurred with a small animal, and the correct behavior in which the pedestrian protection pop-up hood does not operate can be ensured more reliably.

According to this example, a sufficient space 184 is provided between the first leg 110B and the second leg 110C of the absorber 110. Thus, the collision detection sensor 106 determines, when a collision occurs, whether or not the collision is with a pedestrian or a small animal without being affected by the ambient temperature. Further, the amount of crushing of the absorber 110 can be controlled by the surface pressure applied by the first plate 120, and it is therefore possible to cope with changes caused by the ambient temperature.

### Second example of vehicle collision detection apparatus

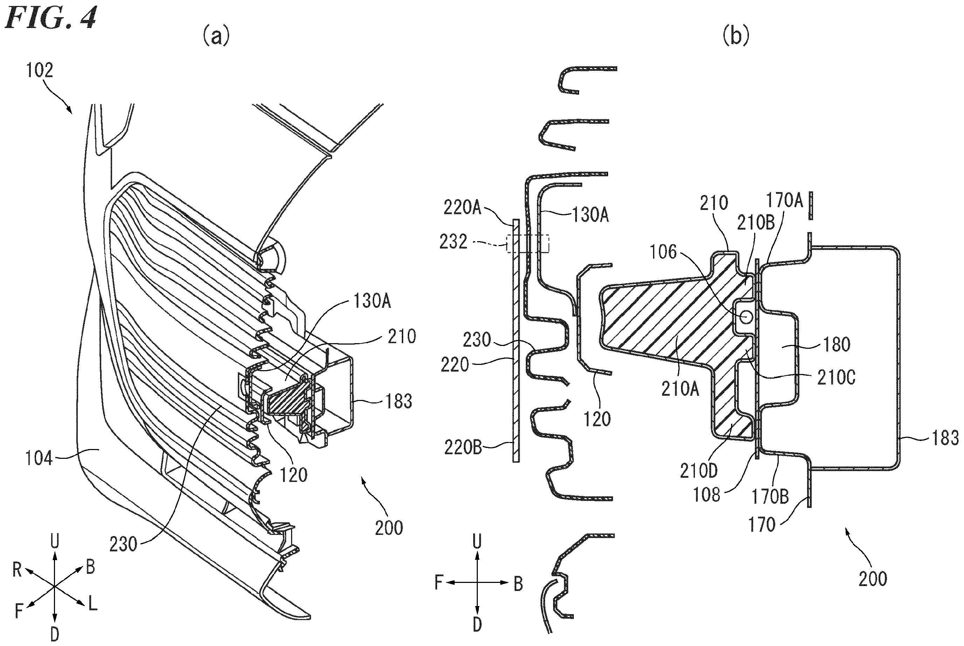

FIG. 4 illustrates a second example of the vehicle collision detection apparatus according to the present invention in correspondence with FIG. 2. FIG. 4(a) is a perspective cross-sectional view of a vehicle collision detection apparatus 200 according to this example, and FIG. 4(b) is a cross-sectional view of the vehicle collision detection apparatus 200 as seen from the right side of vehicle 102. In this example as well, the same elements as those in the first example are assigned the same reference numerals, and the description thereof is omitted.

As shown in FIG. 4, the vehicle collision detection apparatus 200 according to the second example differs from the vehicle collision detection apparatus 100 according to the first example with respect to the shape of an absorber 210. The absorber 210 is the same as the absorber 110 in that it has a main body 210A, a first leg 210B, and a second leg 210C, but is different from the absorber 110 in that it also has a third leg 210D. The third leg 210D overlaps the second protrusion 170B of the bumper reinforcement 170 over a predetermined vertical range with the support plate 108 therebetween.

### License plate

The vehicle collision detection apparatus 200 also includes a license plate 220 disposed forward of the front bumper 104. Note that the license plate 220 is omitted in FIG. 4 (a). As shown in FIG. 4 (b), the second plate 130A of the vehicle collision detection apparatus 200 is fixed to an upper end 220A of the license plate 220 with a grill 230 of the front bumper 104 therebetween, by a fixing member 232 such as a bolt.

According to this configuration of the second example, the second plate 130A is pushed over a wide range by the surface pressure of the license plate 220, which has a large area. This makes the distinction between the ON and OFF states clearer. That is, settings can be made so as to more accurately determine whether a collision is with a pedestrian or is a minor collision with a small animal.

Although a preferable embodiment of the present invention has been described above with reference to the attached drawings, the present invention is, needless to say, not limited to the above-described example. It is apparent that a person skilled in the art may conceive various modifications and variations within the scope of the appended patent claims, and those modifications and variations should be understood to be naturally encompassed in the technical scope of the present invention.

For the present invention, the inventions described in the claims and the examples can be freely combined for implementation, regardless of the dependency of the claims.

### [Industrial Applicability]

The present invention is applicable to a vehicle collision detection apparatus.

### [Index to the Reference Numerals]

100, 200 ... vehicle collision detection apparatus; 102 ... Vehicle; 104 ... Front bumper; 106 ... Collision detection sensor (tube); 108 ... Support plate; 110, 210 ... Absorber; 110A ... Main body of absorber; 110B ... First leg of absorber; 110C ... Second leg of absorber; 120 ... First plate; 130A, 130B ... Second plate; 132 ... Leg of pedestrian; 142 ... Small animal; 160 ... Space; 170 ... Bumper reinforcement; 170A ... First protrusion of bumper reinforcement; 170B ... Second protrusion of bumper reinforcement; 180 ... Recess of bumper reinforcement; 220 ... License plate; 230 ... Grill

## Claims

1. A vehicle collision detection apparatus (100, 200) comprising:
a collision detection sensor (106) that is installed rearward of a front bumper (104) of a vehicle (102) and detects a collision as a result of a pressure being applied to the collision detection sensor (106);
a support plate (108) having a flat-plate shape, located rearward of the collision detection sensor (106), and supporting the collision detection sensor (106);
an absorber (110, 210) that is located forward of the collision detection sensor (106) and applies a pressure to the collision detection sensor (106) when buffering an impact received from front via the front bumper (104);
a first plate (120) covering a front face of the absorber (110, 210) over an entire vertical range of the front face; and
a second plate (130A, 130B) installed forward of the first plate (120) and extending from a higher position than the first plate (120) over a vertical range of the first plate (120) .

2. The vehicle collision detection apparatus (100, 200) according to claim 1,
wherein a lower end of the second plate (130A, 130B) is disposed on the first plate (120) at a higher position than a center of the vertical range of the first plate (120),
an upper end of the second plate (130A, 130B) is a free end, and
a predetermined space (160) is provided rearward of the second plate (130A, 130B) and above the first plate (120).

3. The vehicle collision detection apparatus (100, 200) according to claim 2,
wherein the absorber (110, 210) has:
a main body (110A) covered by the first plate (120) ;
a first leg (110B) extending backward from the main body (110A) and in contact with the support plate (108); and
a second leg (110C) extending backward from the main body (110A) below the first leg (110B), and in contact with the support plate (108),
the collision detection sensor (106) is located between the first leg (110B) and the second leg (110C) of the absorber (110, 210),
the vehicle collision detection apparatus (100, 200) further comprises a bumper reinforcement (170) reinforcing the front bumper (104) and located rearward of the support plate (108),
the bumper reinforcement (170) has a first protrusion (170A) protruding forward and in contact with the support plate (108), and a second protrusion (170B) protruding forward below the first protrusion (170A) and in contact with the support plate (108),
the first leg (110B) of the absorber (110, 210) overlaps the first protrusion (170A) of the bumper reinforcement (170) over a predetermined vertical range, and
the second protrusion (170B) of the bumper reinforcement (170) is in contact with the support plate (108) below the second leg (110C) of the absorber (110, 210).

4. The vehicle collision detection apparatus (100, 200) according to claim 2 or 3, further comprising:
a license plate (220) disposed forward of the front bumper (104),
wherein the second plate (130A, 130B) is fixed to an upper end of the license plate (220) with the front bumper (104) therebetween.
